# EUROPÄISCHE PATENTANMELDUNG

(11) **EP 4 696 919 A1**
(43) Veröffentlichungstag der Anmeldung: **18.02.2026**
(21) Anmeldenummer: 25188568.7
(22) Anmeldetag: 09.07.2025
(51) Int. Cl.: F16L 41/02, F16L 41/03, F16L 47/28, F16L 47/32, H01M 10/6556

(54) **LEITUNGSSYSTEM MIT EINER MEHRZAHL AN ABGÄNGEN**

(30) Priorität: 18.07.2024 DE 102024120452
(71) Anmelder: TI Automotive Technology Center GmbH, 76437 Rastatt (DE)
(72) Erfinder: Kizilay, Irfan, 68799 Reilingen (DE); Roeder, Manuel, 76437 Rastatt (DE); Leipold, Stefan, 67470 Seltz (FR); Trautvetter, Jens, 67930 Beinheim (FR)
(74) Vertreter: Andrejewski - Honke Patent- und Rechtsanwälte Partnerschaft mbB

(57) **Zusammenfassung**

Eine Hauptleitung (1) zum Verteilen oder Sammeln eines Mediums und insbesondere eines Temperiermediums weist ein Hauptrohr (2) und wenigstens 3 Abgänge (3, 4) auf. Die Abgänge (3, 4) sind mit dem Hauptrohr (2) verbunden, wobei die Abgänge (3, 4) jeweils einer Öffnung (5, 6) des Hauptrohrs (2) zugeordnet und an der jeweils zugeordneten Öffnung (5, 6) angeschlossen sind. Das Hauptrohr (2) umfasst eine Achse A und definiert eine axiale Richtung. Das Hauptrohr (2) und/oder wenigstens einer der Abgänge (3, 4) umfasst ein Elastomer.

## Beschreibung

Die Erfindung betrifft eine Hauptleitung zum Verteilen oder Sammeln eines Mediums, insbesondere eines Temperiermediums, beispielsweise für eine Antriebsbatterie eines Fahrzeugs, gemäß dem Oberbegriff des Anspruchs 1. Die Erfindung betrifft ferner ein Leitungssystem umfassend eine solche Hauptleitung, eine Verwendung einer solchen Hauptleitung bzw. eines solchen Leitungssystems sowie ein Verfahren zur Herstellung einer solchen Hauptleitung.

Eine derartige Hauptleitung ist in CN 117317437 A offenbart. Ein Hauptabgang einer Hauptleitung lässt das Medium in Form eines Temperiermediums in ein Hauptrohr strömen oder aus diesem heraus fließen. Das Hauptrohr befindet sich innerhalb eines Gehäuses einer Antriebsbatterie und weist mehrere Nebenabgänge auf, die allesamt innerhalb des Gehäuses angeordnet sind. Die Nebenabgänge sind an plattenförmige, hohl ausgebildete und hochkant stehende Wärmetauscher angeschlossen, die sich entlang einer Längsausdehnung der Antriebsbatterie im Inneren des Gehäuses erstrecken und die Batteriezellen - je nach Bedarf - kühlen oder erwärmen.

Nach Durchlaufen der Wärmetauscher erreicht das Temperiermedium gemäß CN 117317437 A zweite Nebenabgänge einer zweiten Hauptleitung. Die zweite Hauptleitung umfasst außerdem ein zweites Hauptrohr und einen zweiten Hauptabgang. Das Temperiermedium strömt von den zweiten Nebenabgängen in das zweite Hauptrohr, von dort in den zweiten Hauptabgang und schließlich aus dem Gehäuse der Antriebsbatterie heraus. Die Strömungsrichtung des Temperiermediums kehrt sich um, sobald ein Wechsel von einem Kühlmodus zu einem Heizmodus stattfindet oder umgekehrt. Die beiden Hauptleitungen bilden zusammen ein Leitungssystem, welches seinerseits ein Bestandteil eines Fluidsystems ist. Das Fluidsystem mag insbesondere noch einen Tank für das Temperiermedium und/oder eine Pumpe und/oder eine Wärmesenke und/oder eine Wärmequelle aufweisen.

Die vorzugsweise aus Aluminium gefertigten Wärmetauscher werden in der Praxis häufig von anderen Zulieferern hergestellt als die Leitungssysteme, die im Regelfall überwiegend Kunststoff aufweisen. Aufgrund des beengten Raums innerhalb des Gehäuses, aufgrund der teilweise recht zahlreichen Nebenabgänge (teilweise mehr als zehn je Hauptrohr) und aufgrund des Zusammenspiels mehrerer Komponenten bzw. Zulieferer (Batteriegehäuse, Wärmetauscher, Leitungssysteme) ist eine hohe Präzision des Leitungssystems bzw. Toleranzanforderung an den Anschluss der Nebenabgänge an die Wärmetauscher erforderlich.

Aus diesem Grund ist es aus der Praxis bekannt, die Abgänge bzw. Nebenabgänge mit kurzen Wellrohrabschnitten zu versehen, wodurch die Nebenabgänge eine größere Flexibilität erhalten und die Toleranzanforderungen beim Anschluss der Nebenabgänge an die Wärmetauscher problemlos erfüllt werden können. Hierzu werden die Wellrohrabschnitte der Nebenabgänge mit einem hauptrohrseitigen Anschlussteil und einem wärmetauscherseitigen Leitungsverbinder verbunden. Das Anschlussteil dient der bevorzugt stoffschlüssigen Verbindung zwischen dem Hauptrohr und dem Wellrohrabschnitt des Nebenabgangs. Der Leitungsverbinder dient der Verbindung zwischen dem Wellrohrabschnitt des Nebenabgangs und dem Wärmetauscher.

Für die Herstellung jedes Nebenabgangs gemäß dem aus der Praxis bekannten Vorgehen fallen drei Schweißvorgänge (Anschlussteil an Wellrohrabschnitt und Leitungsverbinder an Wellrohrabschnitt) an. Mit einem dritten Schweißvorgang wird dann der Nebenabgang bzw. das Anschlussteil mit dem Hauptrohr verbunden. Außerdem werden drei Teile des Nebenabgangs separat hergestellt. Dieses aus der Praxis bekannte Vorgehen ist daher mit einem hohen Herstellungsaufwand verbunden. Der Erfindung liegt somit die Aufgabe zugrunde, den Herstellungsaufwand für die Hauptleitung bzw. das Leitungssystem zu verringern.

Diese Aufgabe wird gelöst durch eine Hauptleitung zum Verteilen oder Sammeln eines Mediums, insbesondere eines Temperiermediums, wobei die Hauptleitung ein Hauptrohr und wenigstens drei Abgänge aufweist, wobei die Abgänge mit dem Hauptrohr verbunden sind, wobei die Abgänge jeweils einer Öffnung des Hauptrohrs zugeordnet sind und an der jeweils zugeordneten Öffnung angeschlossen sind, wobei das Hauptrohr eine Achse umfasst und eine axiale Richtung definiert, dadurch gekennzeichnet, dass das Hauptrohr und/oder wenigstens einer der Abgänge ein Elastomer umfasst.

Der Erfindung liegt die Erkenntnis zugrunde, dass das Elastomer eine größere Flexibilität des Hauptrohrs bzw. der Abgänge ermöglicht. Hierdurch lässt sich die Hauptleitung deutlich einfacher in das enge Gehäuse einbauen. In der Folge kann auf die Wellrohrabschnitte der Abgänge bzw. Nebenabgänge verzichtet werden, so dass der Nebenabgang nur durch ein einziges, spritzgegossenes Teil gebildet werden kann. Dieses Teil, insbesondere ein Leitungsverbinder, kann etwa mittels Schweißung mit dem Hauptrohr verbunden sein und mag außerdem einen Kupplungsabschnitt zum lösbaren Verbinden mit dem Wärmetauscher aufweisen. Somit bedarf es aufgrund des Elastomers im Hauptrohr lediglich eines Schweißvorgangs und lediglich eines Spritzgusses je Abgang. Im Ergebnis wurde der Herstellungsaufwand verringert und die eingangs genannte Aufgabe gelöst.

Gemäß einer Ausführungsform können die Wellrohrabschnitte der Abgänge des aus der Praxis bekannten Stands der Technik vorzugsweise durch wellrohrfreie Abgänge umfassend das Elastomer ersetzt oder zusätzlich mit dem Elastomer versehen werden, wodurch besonders flexible Abgänge erzielt werden. Hierdurch wird die Handhabbarkeit der Abgänge, insbesondere bei der Installation oder Wartung/Reparatur - deutlich verbessert.

Der Begriff "axial" bezieht sich vorzugsweise auf eine/die Achse bzw. Mittelachse des Hauptrohrs. Es ist möglich, dass das Hauptrohr gebogen ist, sodass die axiale Richtung von der axialen Position des Hauptrohrs abhängig ist. Zu einer bestimmten axialen Richtung gehören zweckmäßigerweise eine Vielzahl an radialen Richtungen und/oder Umlaufrichtungen bzw. tangentiale Richtungen. Im Falle eines gebogenen Hauptrohrs sind somit nicht nur die axialen Richtungen positionsabhängig, sondern auch die radialen Richtungen sowie die Umlaufrichtungen. Zweckmäßigerweise beziehen sich die Richtungsangaben "axial", "radial" und "tangential" jeweils auf eine bestimmte Position bzw. einen bestimmten Abschnitt des Hauptrohrs. Die Richtungsangaben können analog auf die Nebenabgänge und/oder den Hauptabgang angewendet werden.

Die Öffnungen des Hauptrohrs zum Anschluss der Abgänge können an den Stirnseiten und/oder in einer umlaufenden Mantelfläche des Hauptrohrs angeordnet sein. Die umlaufende Mantelfläche des Hauptrohrs kann einen Wellrohrabschnitt bzw. mehrere Wellrohrabschnitte und vorzugsweise wenigstens einen wellrohrfreien Abschnitt aufweisen. Es ist bevorzugt, dass die umlaufende Mantelfläche wenigstens einige und vorzugsweise alle der den Abgängen zugeordneten Öffnungen umfasst.

Gemäß einer sehr bevorzugten Ausführungsform ist einer der Abgänge ein Hauptabgang, wobei wenigstens einer der Abgänge ein Nebenabgang ist, wobei vorzugsweise ein Innendurchmesser des Hauptabgangs und/oder des Hauptrohrs wenigstens axial abschnittsweise größer ist als ein Innendurchmesser des wenigstens einen Nebenabgangs bzw. eines Abschnitts des wenigstens einen Nebenabgangs. Der Innendurchmesser des wenigstens einen Nebenabgangs kann an lediglich einer Stelle kleiner sein als ein Innendurchmesser des Hauptabgangs und insbesondere als Drossel ausgebildet sein. Dies dient der möglichst druckoptimierten Führung des Temperiermediums.

Die Hauptleitung umfasst bevorzugt wenigstens 4/5/6/7/8/9/10/11 Abgänge. Es ist möglich, dass wenigstens 2/3/4/5/6/7/8/9/10 der Abgänge Nebenabgänge sind. Es ist möglich, dass die Hauptleitung lediglich einen Hauptabgang umfasst. Zweckmäßigerweise ist wenigstens eine bzw. lediglich eine der Öffnungen eine Hauptöffnung. Mit Vorteil ist wenigstens eine/2/3/4/5/6/7/8/9/10 der Öffnungen eine Nebenöffnung. Vorzugsweise ist die wenigstens eine Nebenöffnung bzw. sind die Nebenöffnungen des Hauptrohrs dem wenigstens einen Nebenabgang bzw. den in Nebenabgängen zugeordnet. Die Hauptöffnung des Hauptrohrs ist vorzugsweise dem Hauptabgang zugeordnet. Vorteilhafterweise ist eine lichte Fläche der Nebenöffnung bzw. einer der Nebenöffnungen kleiner als eine lichte Fläche der Hauptöffnung.

Zweckmäßigerweise umfasst das Hauptrohr wenigstens einen Abgangsabschnitt und/oder wenigstens einen Zwischenabschnitt. Vorzugsweise umfasst der Abgangsabschnitt einen und insbesondere lediglich einen Abgang bzw. Nebenabgang bzw. Hauptabgang. Es ist bevorzugt, dass eine axiale Ausdehnung des Abgangsabschnitts identisch ist mit einer axialen Ausdehnung des Abgangs/Hauptabgangs/Nebenabgangs bzw. mit der größten axialen Ausdehnung eines der Abgänge des Abgangsabschnitts. Mit Vorteil entspricht die Zahl der Abgangsabschnitte der Zahl der Abgänge bzw. Nebenabgänge.

Zweckmäßigerweise ist der wenigstens eine Zwischenabschnitt in axialer Richtung zwischen zwei - bevorzugt unmittelbar angrenzenden - Abgangsabschnitten angeordnet. Der wenigstens eine Zwischenabschnitt ist vorzugsweise abgangsfrei ausgebildet. Mit Vorteil entspricht die Zahl der Zwischenabschnitte der Zahl der Abgänge bzw. Nebenabgänge minus 1. Es ist möglich, dass der Zwischenabschnitt wenigstens teilweise und bevorzugt vollständig wellrohrfrei ausgebildet ist.

Gemäß einer besonders bevorzugten Ausführungsform ist das Hauptrohr einstückig, vorzugsweise wenigstens schichtweise integral und besonders vorzugsweise vollständig integral ausgebildet. Hierdurch wird eine langlebige fluidische Dichtigkeit erreicht. Außerdem wird hierdurch ein relativ geringer Herstellungsaufwand bezogen auf die Herstellung der Hauptleitung bzw. des Hauptrohrs erreicht. Das Hauptrohr bzw. die Rohrwand des Hauptrohrs kann wenigstens axial abschnittsweise und bevorzugt entlang der gesamten Länge lediglich eine Schicht aufweisen. Das Hauptrohr bzw. die Rohrwand kann mehrere Schichten aufweisen. Das Hauptrohr weist mit Vorteil eine Länge von wenigstens 20 bzw. 30 bzw. 50 bzw. 70 bzw. 90 cm auf. Es ist bevorzugt, dass das Hauptrohr einen Kunststoff umfasst und vorzugsweise wenigstens 50 bzw. 70 bzw. 90 Gew.-% Kunststoff aufweist. Der Kunststoff ist vorzugsweise ein thermoplastischer Kunststoff und mag beispielsweise ein Polyamid und/oder ein thermoplastisches Elastomer aufweisen.

Es ist möglich, dass die Hauptleitung wenigstens einen Endverschluss oder zwei Endverschlüsse umfasst. Dies erlaubt die Bereitstellung beliebiger Längen des Hauptrohrs, welches aus einem strangextrudierten Rohr hergestellt werden kann. Der Endverschluss bzw. die Endverschlüsse ist/sind vorzugsweise in das Hauptrohr - insbesondere an einem oder beiden axialen Enden - eingesetzt. Mit Vorteil dichtet/dichten der Endverschluss bzw. die Endverschlüsse das Hauptrohr in axialer Richtung ab. Der Endverschluss bzw. die Endverschlüsse ist/sind bevorzugt stoffschlüssig mit dem Hauptrohr verbunden.

Der Begriff "einstückig" meint vorzugsweise, dass der einstückige Körper nur in zerstörender Weise, beispielsweise durch Schneiden, in zwei oder mehr Stücke geteilt werden kann. Als Beispiel der Einstückigkeit mag ein Rohr mit mehreren koextrudierten Schichten dienen, welches zwar einstückig, nicht aber über die gesamte Rohrwand hinweg integral ausgebildet ist. Der Begriff "integral" meint vorzugsweise einen Körper, welcher aus lediglich einer Schmelze entstanden ist. Beispielsweise sind spritzgegossene Körper mit lediglich einer Kunststoffschmelze integral ausgebildete Körper. Folglich ist ein mehrschichtiges, koextrudiertes Rohr schichtenweise integral ausgebildet und insgesamt bzw. über die gesamte Rohrwand hinweg auch einstückig, nicht aber über die gesamte Rohrwand hinweg integral ausgebildet. Der Grund hierfür ist, dass jede der Rohrschichten einer eigenen Schmelze zugeordnet ist. Die verschiedenen Rohrschichten sind zweckmäßigerweise mikroskopisch oder durch andere Bildgebungsverfahren insbesondere an Grenzflächen zwischen den Schichten erkennbar.

Es ist bevorzugt, dass ein Gewichtsanteil des Elastomers wenigstens 30 bzw. 40 bzw. 50 bzw. 60 bzw. 70 bzw. 80% beträgt. Dies bedingt eine gute Flexibilität des Hauptrohrs. Das Elastomer ist vorzugsweise ein thermoplastisches Elastomer und besonders vorzugsweise ein thermoplastisches Vulkanisat. Mit Vorteil umfasst/ist das Elastomer ein EPDM. Bevorzugt weist das Elastomer ein Polypropylen auf. Ganz besonders bevorzugt umfasst das Elastomer ein EPDM und ein Polypropylen bzw. ein EPDM in einer Polypropylen-Matrix.

Es ist bevorzugt, dass das Hauptrohr auf seiner Außenseite wenigstens einen Quergrat und vorzugsweise eine Vielzahl an Quergraten aufweist. Dies ist ein Kennzeichen der Herstellung des Hauptrohrs mittels Kettengliedern, was eine kostengünstige Herstellung des Hauptrohrs erlaubt. Insbesondere Formwerkzeuge mit Ketten bzw. Kettengliedern sind verhältnismäßig günstig. Quergrate können auch ein Kennzeichen eines 3D-Blasformverfahrens sein, welches eine hohe Variantenzahl bei der Herstellung der Hauptleitung erlaubt. Im Falle eines 3D-Blasformverfahrens können Komponenten, wie z.B. Endkappen in das Hauptrohr integriert werden. Es ist möglich, dass - insbesondere jeweils - wenigstens ein Quergrat und vorzugsweise zwei Quergrate zwischen zwei Abgängen bzw. Nebenabgängen angeordnet ist/sind. Es ist möglich, dass ein Quergrat in einem mittleren, axialen Drittel eines Zwischenabschnitts angeordnet ist. Es ist bevorzugt, dass ein Quergrat in einem axial äußeren Drittel eines Zwischenabschnitts angeordnet ist. Es ist bevorzugt, dass ein erster Quergrat in einem ersten axial äußeren Drittel eines Zwischenabschnitts und ein zweiter Quergrat in einem zweiten axial äußeren Drittel eines Zwischenabschnitts angeordnet ist.

Mit Vorteil umfasst das Hauptrohr wenigstens einen Längsgrat und insbesondere zwei Längsgrate, welcher/welche sich auf einer Außenseite des Hauptrohrs in axialer Richtung bzw. parallel zur Achse erstreckt bzw. erstrecken. Vorzugsweise liegen die beiden Längsgrate einander diametral gegenüber. Längsgrate entstehen zweckmäßigerweise durch Formgebung der Abgangsabschnitte, wenn Kettenglieder zweier Ketten aneinander stoßen. Folglich sind Längsgrate ein Kennzeichen der Herstellung der Abgangsabschnitte mittels Kettenglieder, sodass hierdurch eine kostengünstige Herstellung erreicht wird.

Gemäß einer besonders bevorzugten Ausführungsform wird wenigstens eine der Öffnungen bzw. Nebenöffnungen bzw. die Hauptöffnung durch einen Anschlussstutzen gebildet, wobei der Anschlussstutzen gegenüber einer Außenoberfläche des Hauptrohrs in einem Querschnitt des Hauptrohrs vorzugsweise wenigstens abschnittsweise - insbesondere nach radial außen - vorspringt. Dies stellt eine einfache Möglichkeit zur Verbindung der Abgänge mit dem Hauptrohr her. Dies erlaubt es insbesondere, dass relativ viele, einfach gehaltene Standardkomponenten der Nebenabgänge leicht mit dem Hauptrohr verbunden werden können. Der Begriff "vorspringt" meint insbesondere, dass im Querschnitt des Hauptrohrs eine Ausbuchtung der Wand des Hauptrohrs nach außen erkennbar ist. Zweckmäßigerweise steht der Anschlussstutzen gegenüber einer Außenoberfläche der umlaufenden Mantelfläche des Hauptrohrs nach radial außen oder innen vor. Der Anschlussstutzen ist vorzugsweise ringförmig und insbesondere kreisringförmig ausgebildet. Es ist möglich, dass der Anschlussstutzen gegenüber einer Rohrwand bzw. einer Außenoberfläche des Hauptrohrs nach radial innen vorspringt. Es ist möglich, dass der Anschlussstutzen in radialer Richtung weder nach radial innen noch nach radial außen vorspringt, so dass zweckmäßigerweise der Anschlussstutzen auf die zugeordnete Öffnung im Hauptrohr beschränkt ist. Mit Vorteil ist der Anschlussstutzen so ausgebildet, dass ein kreisrunder Anschlussabschnitt des Abgangs bzw. Nebenabgangs bzw. Hauptabgangs an dem Anschlussstutzen befestigbar ist. Es ist von Vorteil, dass eine niedrigste Stelle des Anschlussstutzens wenigstens 1/1,5/2/2,5/3/3,5/4 mm gegenüber einer Außenoberfläche bzw. der umlaufenden Mantelfläche des Hauptrohrs nach radial außen hervorspringt. Zweckmäßigerweise steht eine höchste Stelle des Anschlussstutzens höchstens 20 bzw. 15 bzw. 10 bzw. 8 bzw. 6 mm von einer Außenoberfläche der umlaufenden Mantelfläche des Hauptrohrs in radialer Richtung nach außen ab.

Mit Vorteil umfasst wenigstens einer der Abgänge bzw. Nebenabgänge einen Verbinder bzw. Leitungsverbinder, wobei vorzugsweise der Leitungsverbinder einen Anschlussabschnitt umfasst und der Anschlussabschnitt mit dem Hauptrohr bzw. mit einer zugeordneten Nebenöffnung bzw. mit einem zugeordneten Anschlussstutzen des Hauptrohrs - insbesondere stoffschlüssig und besonders vorzugsweise mittels Schweißung - verbunden ist. Durch die direkte Verbindung eines Leitungsverbinders mit dem Hauptrohr können Schweißvorgänge eingespart werden, sodass je Nebenabgang lediglich ein Schweißvorgang erforderlich ist. Insbesondere können dadurch Rohrabschnitte der Nebenabgänge eingespart werden, welche ihrerseits mit dem jeweiligen Leitungsverbinder auf der einen Seite sowie mit einem Anschlussteil auf der anderen Seite verbunden werden müssen, damit das Anschlussteil schließlich in einem letzten Schweißvorgang mit dem Hauptrohr verbunden werden kann. Der Leitungsverbinder umfasst vorzugsweise einen Leitungsverbinderkörper und eine Dichtung bzw. insbesondere einen Dichtring. Der Leitungsverbinderkörper ist besonders vorzugsweise einstückig und insbesondere integral ausgebildet. Mit Vorteil umfasst der Leitungsverbinderkörper einen Anschlussabschnitt und/oder einen Kupplungsabschnitt und/oder einen Mittelabschnitt. Es ist bevorzugt, dass der Anschlussabschnitt des Leitungsverbinderkörpers mit dem Hauptrohr bzw. einer Öffnung bzw. Nebenöffnung bzw. einen/dem Anschlussstutzen bzw. einem/dem Rohrabschnitt verbunden, insbesondere stoffschlüssig verbunden und besonders vorzugsweise mittels Schweißung verbunden wird.

Gemäß einer Ausführungsform umfasst wenigstens einer der Abgänge bzw. Nebenabgänge einen Rohrabschnitt und/oder ein Anschlussteil bzw. Anschlussstück und/oder einen Leitungsverbinder. Dieser größere Herstellungsaufwand bietet den Vorteil, dass die Anschlussflexibilität deutlich vergrößert ist. Das Anschlussteil bzw. das Anschlussstück kann einstückig und insbesondere integral ausgebildet sein. Zweckmäßigerweise ist der Rohrabschnitt mit dem Leitungsverbinder, insbesondere stoffschlüssig und vorzugsweise mittels Schweißung, verbunden. Es ist möglich, dass der Rohrabschnitt mit dem Anschlussteil insbesondere stoffschlüssig und vorzugsweise mittels Schweißung verbunden ist. Das Anschlussteil bzw. das Anschlussstück ist zweckmäßigerweise mit dem Hauptrohr bzw. einer der Öffnungen bzw. einem Anschlussstutzen des Hauptrohrs insbesondere stoffschlüssig und vorzugsweise mittels Schweißung verbunden.

Der Rohrabschnitt kann bzw. die Rohrabschnitte können ein - vorzugsweise thermoplastisches - Elastomer aufweisen. Der Rohrabschnitt kann bzw. die Rohrabschnitte können einstückig und vorzugsweise integral ausgebildet und beispielsweise mittels Spritzguss hergestellt sein. Der Rohrabschnitt kann bzw. die Rohrabschnitte können mit einem ersten Ende mit dem Hauptrohr - insbesondere durch Schweißung - verbunden sein, so dass es vorteilhafterweise eines Anschlussteils nicht bedarf. Der Rohrabschnitt kann bzw. die Rohrabschnitte können mit einem zweiten Ende mit dem Leitungsverbinder - insbesondere durch Schweißung - verbunden sein.

Es ist von Vorteil, wenn wenigstens einer der Abgänge einen Kupplungsabschnitt zum - vorzugsweise lösbaren - Verbinden mit einer Fluidkomponente umfasst. Die Fluidkomponente ist bevorzugt Bestandteil einer Antriebsbatterie. Es ist sehr von Vorteil, wenn der Leitungsverbinder bzw. Leitungsverbinderkörper bzw. Kupplungsabschnitt wenigstens ein Rastelement und vorzugsweise zwei Rastelemente zum verrastenden Verbinden mit einer Fluidkomponente aufweist. Hierdurch kann durch das Vorsehen lediglich eines Leitungsverbinders eine weitere Fluidkomponente, z.B. ein Wärmetauscher einer Antriebsbatterie, mit dem Hauptrohr verbunden werden. Dies erlaubt ein schnelles, komfortables Anschließen dieser Fluidkomponenten an die Hauptleitung. Es ist vorteilhaft, wenn wenigstens einer der Abgänge bzw. Nebenabgänge einen Verbinder bzw. Leitungsverbinder aufweist, wobei der Nebenabgang bzw. der Verbinder bzw. der Leitungsverbinder bzw. Leitungsverbinderkörper einen Kupplungsabschnitt zum - vorzugsweise lösbaren - Verbinden mit einer Fluidkomponente insbesondere eine Antriebsbatterie umfasst.

Das wenigstens eine Rastelement ist mit Vorteil federelastisch ausgebildet. Vorteilhafterweise ist das wenigstens eine Rastelement als Rastarm ausgestaltet, welcher vorzugsweise eine Rastnase aufweist. Die Rastnase mag in eine komplementäre Ausnehmung der Fluidkomponente eingreifen können. Es ist bevorzugt, dass die beiden Rastarme hinsichtlich einer Achse des Kupplungsabschnitts einander diametral gegenüberliegen. Vorzugsweise verläuft eine Längsausdehnung des wenigstens einen Rastarms parallel zu einer Achse des Kupplungsabschnitts. Es ist bevorzugt, dass der wenigstens eine Rastarm in radialer Richtung federelastisch beweglich ist.

Es ist sehr bevorzugt, dass der Leitungsverbinder eine Dichtung bzw. einen Dichtungsring aufweist. Mit Vorteil umfasst der Leitungsverbinder bzw. der Leitungsverbinderkörper bzw. der Kupplungsabschnitt des Leitungsverbinderkörpers eine umlaufende Dichtungsnut, in welche die Dichtung bzw. der Dichtungsring eingesetzt ist. Es ist bevorzugt, dass der Kupplungsabschnitt eine Außenseite aufweist, in welcher die Dichtungsnut angeordnet ist. Mit Vorteil ist das wenigstens eine Rastelement radial außerhalb der Dichtungsnut bzw. der Dichtung angeordnet. Zweckmäßigerweise definieren die Dichtung und das wenigstens eine Rastelement in radialer Richtung zwischen sich einen Freiraum, in welchen ein komplementärer Kupplungsabschnitt einer mit dem Leitungsverbinder zu verbindenden Fluidkomponente eingeführt werden kann.

Mit Vorteil umfasst der wenigstens eine Nebenabgang bzw. der wenigstens eine Leitungsverbinder bzw. der wenigstens eine Leitungsverbinderkörper bzw. der wenigstens eine Rohrabschnitt bzw. das wenigstens eine Anschlussteil bzw. das wenigstens eine Anschlussstück des wenigstens einen Nebenabgangs einen Kunststoff bzw. umfasst wenigstens 50 bzw. 70 bzw. 90 Gew.-% Kunststoff.

Es ist möglich, dass das Hauptrohr wenigstens einen Wellrohrabschnitt und vorzugsweise wenigstens zwei bzw. mehrere Wellrohrabschnitte umfasst. Hierdurch wird die Flexibilität des Hauptrohrs weiter erhöht. Der Begriff "Wellrohrabschnitt" meint vorzugsweise einen Abschnitt mit sich wiederholend alternierenden Innen- und/oder Außendurchmessern. Die Kontur des Innen-und/oder Außendurchmessers kann in einem Längsschnitt des Wellrohrabschnitts beispielsweise sinusförmig, rechteckig oder sägezahnartig ausgebildet sein, sodass der Begriff "gewellt" sich vorzugsweise nicht nur auf sinusförmige Konturen erstreckt.

Vorzugsweise umfasst der wenigstens eine Zwischenabschnitt bzw. wenigstens einer der bzw. mehrere der und bzw. jeder der Zwischenabschnitte wenigstens einen und bevorzugt lediglich einen Wellrohrabschnitt. Mit Vorteil ist der Wellrohrabschnitt bzw. sind die Wellrohrabschnitte lediglich einem der Zwischenabschnitte bzw. den Zwischenabschnitten zugeordnet bzw. nur Bestandteil der Zwischenabschnitte und insbesondere nicht Bestandteil der Abgangsabschnitte. Es ist möglich, dass ein Zwischenabschnitt wenigstens einen wellrohrfreien Teilabschnitt aufweist.

Es ist sehr vorteilhaft, dass der wenigstens eine Abgangsabschnitt sich in axialer Richtung mit einer der Öffnungen bzw. der zugeordneten überlappt. Hierdurch werden glatte und insbesondere zylindrische Wände bzw. Wände ohne alternierenden Außen- bzw. Innendurchmesser erreicht, wodurch die Öffnungen besser für den Anschluss an die Abgänge geeignet sind. Vorzugsweise überlappen wenigstens 50 bzw. 70 bzw. 90 bzw. 95 % der axialen Ausdehnung einer Öffnung bzw. Hauptöffnung bzw. Nebenöffnung in axialer Richtung mit einem zugeordneten Abgangsabschnitt. Es ist bevorzugt, dass der Abgangsabschnitt entlang wenigstens eines axialen Teilabschnitts - wenigstens teilweise und bevorzugt vollständig über einen Umlauf hinweg - wellrohrfrei ausgebildet ist. Es ist möglich, dass ein von der Öffnung abgewandter Teilabschnitt des Hauptrohrs bzw. des Abgangsabschnitts bzw. ein der Öffnung gegenüberliegender Abschnitt des Hauptrohrs gewellt ausgebildet ist. Vorzugsweise überlappen wenigstens 50 bzw. 70 bzw. 90 bzw. 95 % der axialen Ausdehnung der Hauptöffnung in axialer Richtung mit einem zugeordneten Abgangsabschnitt.

Es ist sehr bevorzugt, dass der wenigstens eine Wellrohrabschnitt bzw. Zwischenabschnitt in axialer Richtung zwischen zwei der Öffnungen angeordnet ist bzw. jeder der Wellrohrabschnitte jeweils zwischen zwei der Öffnungen befindlich ist. Es ist von Vorteil, dass das Hauptrohr wenigstens 2/3/4/5/6/7/8 Abgangsabschnitte umfasst. Es ist sehr bevorzugt, dass die Zahl der Abgangsabschnitte der Zahl der Abgänge oder der Zahl der Nebenabgänge entspricht. Es ist möglich, dass die Zahl der Zwischenabschnitte gleich der Zahl der Abgänge -1 oder der Zahl der Nebenabgänge -1 entspricht. Mit Vorteil ist der Hauptabgang einem Abgangsabschnitt zugeordnet, welchem zugleich ein Nebenabgang zugeordnet ist. Vorzugsweise ist wenigstens eine der Öffnungen in axialer Richtung vollständig von einem wellrohrfreien Bereich umschlossen.

Die eingangs genannte Aufgabe wird gelöst durch ein Leitungssystem zum Verteilen und Sammeln eines Temperiermediums, wobei das Leitungssystem eine erste erfindungsgemäße Hauptleitung umfasst, wobei das Leitungssystem eine zweite erfindungsgemäße Hauptleitung aufweist. Dies bewirkt, dass sich die Wirkungen der Hauptleitung auf das gesamte Leitungssystem erstrecken. Die zweite Hauptleitung weist bevorzugt ein zweiten Hauptabgang und/oder ein zweites Hauptrohr und/oder zweite Nebenabgänge auf. Es ist möglich, dass die zweite Hauptleitung die Merkmale der erfindungsmäßen Hauptleitung und vorzugsweise sämtliche Merkmale der erfindungsgemäßen Hauptleitung aufweist.

Die eingangs genannte Aufgabe wird gelöst durch die Verwendung einer erfindungsgemäßen Hauptleitung bzw. eines erfindungsgemäßen Leitungssystems zur Temperierung einer mobilen oder stationären Einrichtung und insbesondere einer mobilen oder stationären Batterie. Die mobile Batterie ist vorzugsweise eine Antriebsbatterie eines Fahrzeugs. Die Hauptleitung bzw. das Leitungssystem sind insbesondere von Vorteil für Antriebsbatterien, da Antriebsbatterien häufig eine Vielzahl an Wärmetauschern aufweisen, welche parallel von dem Temperiermedium durchflossen werden. Die stationäre Einrichtung kann eine Verteilereinrichtung oder ein Batteriespeicher sein, beispielsweise ein Batteriespeicher für eine unterbrechungsfreie Stromversorgung einer kritischen Einrichtung oder ein Batteriespeicher zur Stabilisierung des Spannungsnetzes. Das Medium ist vorzugsweise ein Temperiermedium. Das Medium/Temperiermedium kann flüssig und/oder gasförmig ausgebildet sein. Das Medium/Temperiermedium mag lediglich in flüssiger Form vorliegen.

Die eingangs genannte Aufgabe wird gelöst durch ein Verfahren zur Herstellung einer Hauptleitung, insbesondere einer erfindungsgemäßen Hauptleitung, wobei die Hauptleitung ein Hauptrohr und wenigstens drei Abgänge aufweist, wobei die Abgänge mit dem Hauptrohr verbunden sind, wobei die Abgänge jeweils an eine Öffnung des Hauptrohrs angeschlossen sind, wobei vorzugsweise das Hauptrohr aus einem extrudierten bzw. koextrudierten Rohr hergestellt wird.

Die bevorzugte Extrusion erlaubt besonders günstige Formwerkzeuge. Zweckmäßigerweise wird das Rohr mittels eines Extruders extrudiert. Es ist möglich, dass das Rohr mit lediglich einer Schicht extrudiert oder mit mehreren Schichten koextrudiert wird. Es ist möglich, dass das Rohr ein Vorformling ist, welcher in ein Blasformwerkzeug eingelegt wird. Vorzugsweise formt das Blasformwerkzeug das Rohr zu einem Hauptrohr.

Vorzugsweise ist dem Extruder ein Formwerkzeug zur Herstellung wenigstens eines Abgangsabschnitts und/oder eines Zwischenabschnitts am Hauptrohr nachgeschaltet. Es ist bevorzugt, dass das Rohr sich einstückig von dem Extruder bis zu dem Formwerkzeug bzw. dem Formbereich des Formwerkzeug erstreckt. Gemäß einer anderen Ausführungsform wird das Rohr nach der Extrusion aufgewickelt, dann aufgewickelt zwischengelagert und dann dem Formwerkzeug zugeführt.

Mit Vorteil umfasst das Formwerkzeug zwei Ketten mit jeweils einer Vielzahl an Kettengliedern. Zweckmäßigerweise werden die beiden Ketten umlaufend verfahren. Mit Vorteil sind die Umlaufrichtungen der beiden Ketten zueinander gegensinnig ausgerichtet. Es ist bevorzugt, dass die beiden Ketten bzw. Kettenglieder der umlaufenden Ketten in einem Formbereich an jeweils gegenüberliegende Kettenglieder der jeweils anderen Kette anschlagen. Zweckmäßigerweise besitzen die Kettenglieder beider Ketten im Formbereich die gleiche Geschwindigkeit und die gleiche Bewegungsrichtung wie das Hauptrohr. Es ist von Vorteil, dass das Rohr während der Formung im Formbereich des Formwerkzeugs mit einem Innendruck beaufschlagt wird.

Mit Vorteil ist dem Formwerkzeug in Laufrichtung des Hauptrohrs ein Schneidwerkzeug nachgeschaltet. Das Schneidwerkzeug umfasst zweckmäßigerweise ein Schneidelement, welches Abschlussstücke von Anschlussstutzen des Hauptrohrs abschneidet. Mit Vorteil ist dem Schneidwerkzeug ein Trennwerkzeug nachgeschaltet. Dass Trennwerkzeug durchtrennt zweckmäßigerweise das Rohr und teilt es in Hauptrohre auf.

Die Erfindung wird nachfolgend anhand von fünf Figuren und zwei Ausführungsbeispielen erläutert. Es zeigen in schematischer Darstellung
- Fig. 1: eine perspektivische Ansicht einer erfindungsgemäßen Hauptleitung,
- Fig. 2: einen vergrößerten Ausschnitt aus Fig. 1,
- Fig. 3: einen vergrößerten Längsschnitt durch die Hauptleitung aus Fig. 1,
- Fig. 4: eine Seitenansicht der Hauptleitung aus Fig. 1, allerdings ohne Nebenabgänge und in vergrößerter Darstellung und
- Fig. 5: eine Seitenansicht eines zweiten Ausführungsbeispiels einer erfindungsgemäßen Hauptleitung.

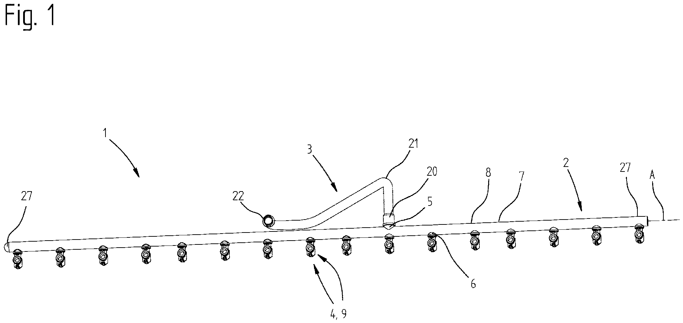

Gemäß Fig. 1 umfasst eine erfindungsgemäße Hauptleitung 1 ein Hauptrohr 2 sowie eine Mehrzahl an Abgängen 3, 4. Die Mehrzahl an Abgängen 3, 4 umfasst zweckmäßigerweise einen Hauptabgang 3 sowie eine Vielzahl an Nebenabgängen 4. Die Hauptleitung 1 ist vorzugsweise dazu ausgebildet, ein Temperiermedium durch den Hauptabgang 3 zu dem Hauptrohr 2 zu führen, von wo aus das Temperiermedium auf die Vielzahl an Nebenabgängen 4 verteilt wird. Es ist bevorzugt, dass die Vielzahl an Nebenabgängen 4 mit einer entsprechenden Vielzahl an Wärmetauschern innerhalb - beispielsweise - einer Antriebsbatterie eines Fahrzeugs verbunden wird.

Die hier nicht abgebildeten Wärmetauscher können beispielsweise plattenförmige, hohl ausgebildete Elemente aus Aluminium sein. Die Wärmetauscher können aber auch flache, gewellte und hohl ausgebildete Elemente sein. Darüber hinaus können die Wärmetauscher beispielsweise auch rohrförmig ausgestaltet sein. Es ist sehr bevorzugt, dass die Wärmetauscher innerhalb der Antriebsbatterie bzw. eines Gehäuses der Antriebsbatterie befindlich sind. Zweckmäßigerweise ist auch die Hauptleitung 1 innerhalb des Gehäuses einer Antriebsbatterie angeordnet.

Es ist zweckmäßig, dass eine weitere Hauptleitung 1 in Strömungsrichtung nach den Wärmetauschern angeordnet ist, welche bevorzugt identisch zur Hauptleitung 1 ausgebildet ist. Die weitere Hauptleitung mag ebenso viele Nebenabgänge aufweisen, sodass die weitere Hauptleitung das Temperiermedium aus der Vielzahl an Wärmetauschern in einem Hauptrohr der weiteren Hauptleitung sammelt und von dort an einen weiteren Hauptabgang weiterleitet. Die beiden Hauptleitungen 1 bilden zusammen vorzugsweise ein Leitungssystem, welches eine möglichst großflächige Temperierung der Antriebsbatterie gewährleistet.

Zweckmäßigerweise ist das Leitungssystem dazu ausgebildet, dass das Temperiermedium in beide Richtungen fließen kann, sodass ein Kühlmodus sowie ein Heizmodus zum Kühlen bzw. Heizen der Antriebsbatterie bereitgestellt werden. Neben geringeren Herstellungskosten bei identischen Hauptleitungen 1 vor und nach den Wärmetauschern bedeuten identische Hauptleitungen 1 zugleich auch, dass das Temperiermedium in beiden Strömungsrichtungen vergleichbare fluidische Widerstände erfährt, was unter konstruktiven Gesichtspunkten von Vorteil sein kann bzw. Vereinfachungen bei der Systemsimulation und -auslegung mit sich bringen kann.

Die beiden Hauptleitungen 1 des Leitungssystems können hinsichtlich der Wärmetauscher diametral einander gegenüberliegend angeordnet sein. Gemäß einer Ausführungsform befinden sich die Hauptleitung 1 sowie die weitere Hauptleitung auf derselben Seite bezüglich der Wärmetauscher bzw. in unmittelbarer Nachbarschaft. Es ist möglich, dass die Wärmetauscher so ausgebildet sind, dass das Temperiermedium innerhalb eines Wärmetauschers zunächst einen Vorlauf erfährt, und dann innerhalb desselben Wärmetauschers entlang eines Rücklaufes zurück zu den Hauptleitungen fließt.

Mit Blick auf Fig. 1 weist das Hauptrohr 2 vorzugsweise eine Vielzahl an Abgangsabschnitten 8 auf. Die Abgangsabschnitte 8 wechseln sich zweckmäßigerweise entlang einer Achse A des Hauptrohrs 2 mit Zwischenabschnitten 7 ab. Es ist sehr bevorzugt, dass die Nebenabgänge 4 und/oder der Hauptabgang 3 jeweils an einem Abgangsabschnitt 8 angeschlossen sind. Zweckmäßigerweise ist lediglich ein Nebenabgang 4 je Abgangsabschnitt 8 vorgesehen. Es ist möglich, dass einer der Nebenabgänge 4 sowie der Hauptabgang 3 an demselben Abgangsabschnitt 8 angeschlossen sind.

**In** diesem Ausführungsbeispiel umfasst der Hauptabgang 3 einen Anschlusskörper 20, ein Rohrstück 21 und/oder einen Rohrverbinder 22. Über ein weiteres, an den Hauptabgang 3 bzw. an den Rohrverbinder 22 angeschlossenes und hier nicht dargestelltes Rohr mag dann der Fluidstrom außerhalb eines hier ebenfalls nicht dargestellten Gehäuses der Antriebsbatterie geführt werden. Der Rohrverbinder 22 kann insbesondere als Schnellverbinder bzw. als Verbinder mit Rastelement ausgebildet sein.

Es ist möglich, dass der Anschlusskörper 20 stoffschlüssig und insbesondere mittels Schweißung an dem Rohrstück 21 und/oder an dem Hauptrohr 2 befestigt ist. Zweckmäßigerweise umfasst das Hauptrohr 2 eine Hauptöffnung 5, an welche der Anschlusskörper 20 angeschlossen ist. Die Hauptöffnung 5 kann insbesondere durch einen Öffnungsvorsprung gebildet sein, welcher bevorzugt gegenüber einer vorzugsweise ovalen oder zylindrischen Außenoberfläche des Hauptrohrs 2 nach radial außen hervorspringt.

**In** diesem Ausführungsbeispiel weist das Hauptrohr 2 an wenigstens einem von beiden und vorteilhafterweise an beiden axialen Enden jeweils ein verschlossenes Rohrende 27 auf. Es ist bevorzugt, dass das Hauptrohr 2 an mindestens einem Abgangsabschnitt 8, vorzugsweise an mehreren Abgangsabschnitten 8 und ganz besonders bevorzugt an allen Abgangsabschnitten 8 eine der Nebenöffnungen 6 aufweist. Zweckmäßigerweise sind die Nebenabgänge 4 an die Nebenöffnungen 6 angeschlossen.

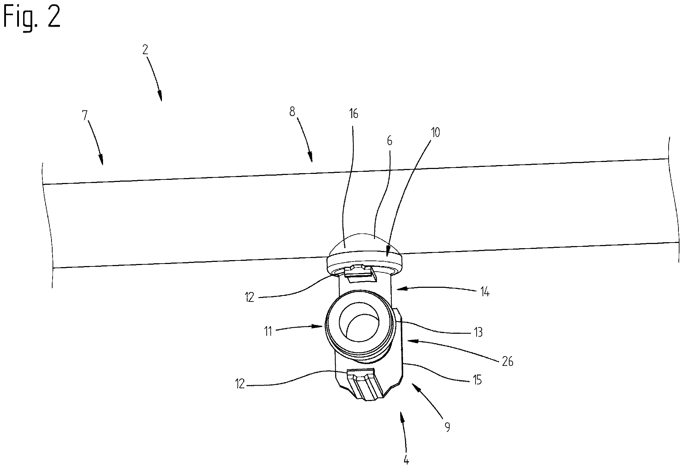

Der Anschluss der Nebenabgänge 4 an das Hauptrohr 2 bzw. die Nebenöffnungen 6 ist in Fig. 2 vergrößert dargestellt. Die Nebenöffnung 6 wird vorzugsweise durch einen - insbesondere ringförmigen und vorzugsweise kreisringförmigen - Anschlussstutzen 16 gebildet. Der Anschlussstutzen 16 springt bevorzugt gegenüber einer Außenoberfläche des Hauptrohrs 2 - um beispielweise 3mm - vor, welche im Querschnitt beispielsweise oval, kreisrund oder vieleckig ausgebildet sein kann.

In diesem Ausführungsbeispiel umfasst der Nebenabgang 4 bzw. umfassen einige der oder alle der Nebenabgänge 4 vorteilhafterweise und gemäß Fig. 2 (jeweils) lediglich einen Leitungsverbinder 9. Der Leitungsverbinder 9 weist bevorzugt einen Leitungsverbinderkörper 26 und/oder eine Dichtung 13 auf. Die Dichtung 13 mag als Dichtungsring ausgebildet sein und/oder ein Elastomer umfassen. Der Leitungsverbinderkörper 26 weist vorteilhafterweise einen Anschlussabschnitt 10, einen Mittelabschnitt 14 und/oder einen Kupplungsabschnitt 11 auf. Zweckmäßigerweise ist der Mittelabschnitt 14 zwischen dem Anschlussabschnitt 10 und dem Kupplungsabschnitt 11 angeordnet und mit Vorteil hohl ausgebildet, um den Anschlussabschnitt 10 mit dem Kupplungsabschnitt 11 fluidisch zu verbinden. Der Leitungsverbinderkörper 26 bzw. der Kupplungsabschnitt 11 kann insbesondere als männliches Steckelement ausgebildet sein. Vorzugsweise ist die Dichtung 13 bzw. der Dichtungsring auf einer Außenseite des Kupplungsabschnitts 11 angeordnet.

Vorteilhafterweise umfasst der Leitungsverbinder 9 bzw. der Leitungsverbinderkörper 26 wenigstens ein Rastelement 12 und vorzugsweise zwei Rastelemente 12 und insbesondere zwei Rastarme. In diesem Ausführungsbeispiel umfasst der Leitungsverbinder 9 bzw. der Leitungsverbinderkörper 26 zwei diametral zueinander angeordnete Rastarme, welche sich mit ihrer Längsausdehnung vorzugsweise parallel zum Kupplungsabschnitt 11 erstrecken. Der Leitungsverbinder 9 bzw. der Leitungsverbinderkörper 26 mag eine Rastelementbasis 15 aufweisen, an welche vorzugsweise die beiden Rastelemente 12 angeschlossen sind. In diesem Ausführungsbeispiel ist der Anschlussabschnitt 10 des Leitungsverbinders 9 bzw. des Leitungsverbinderkörpers 26 mit dem Anschlussstutzen 16 des Hauptrohrs 2 stoffschlüssig und vorzugsweise mittels Schweißung verbunden. Der Leitungsverbinderkörper 26 ist bevorzugt einstückig und insbesondere integral ausgebildet.

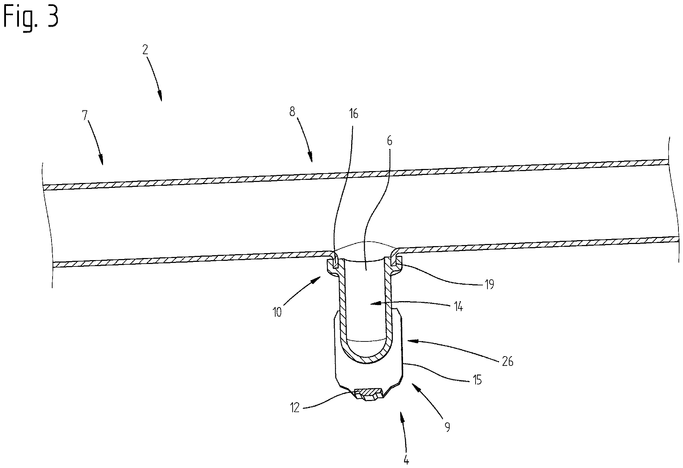

Der in Fig. 3 gezeigte Längsschnitt durch das Hauptrohr 2 sowie auch durch den Leitungsverbinder 9 bzw. Leitungsverbinderkörper 26 verdeutlicht, wie der Nebenabgang 4 bzw. der Leitungsverbinder 9 mit dem Hauptrohr 2 verbunden sein kann. Mit Vorteil umfasst der Anschlussabschnitt 10 des Leitungsverbinders 9 eine Außenwand und/oder eine Innenwand. Es ist bevorzugt, dass der Anschlussabschnitt 10 eine Ausnehmung 19 - insbesondere eine Nut - zur Aufnahme eines Anschlussstutzens 16 aufweist. Bevorzugt bildet/bilden die Außenwand und/oder die Innenwand des Anschlussabschnitts 10 die Ausnehmung 19 bzw. Nut.

Der Anschlussstutzen 16 des Hauptrohrs 2 in Form des bevorzugten ringförmigen Kragens mag in die Ausnehmung 19 bzw. Nut des Leitungsverbinders 9 eingeführt bzw. darin angeordnet sein. Es ist möglich, dass der in die Ausnehmung 19 eingeführte Anschlussstutzen 16 mittels Schweißung, beispielsweise mittels Laserschweißen oder Rotationsschweißen eine Befestigung des Leitungsverbinders 9 an dem Hauptrohr 2 ermöglicht.

In diesem Ausführungsbeispiel wird das Hauptrohr 2 mittels Extrusion aus einem einschichtigen Rohr hergestellt. Aufgrund der Extrusion ist der Querschnitt des Rohrs/Hauptrohrs zu diesem Zeitpunkt entlang der Längsausdehnung noch konstant. Das kontinuierlich extrudierte Rohr bzw. Hauptrohr 2 mag dann ein hier nicht dargestelltes Formwerkzeug zur Herstellung der Zwischenabschnitte 7 sowie der Abgangsabschnitte 8 einschließlich der Anschlussstutzen 16 bzw. der Hauptöffnung 5 mit den noch nicht abgeschnittenen Abschlussstücken 17 erreichen.

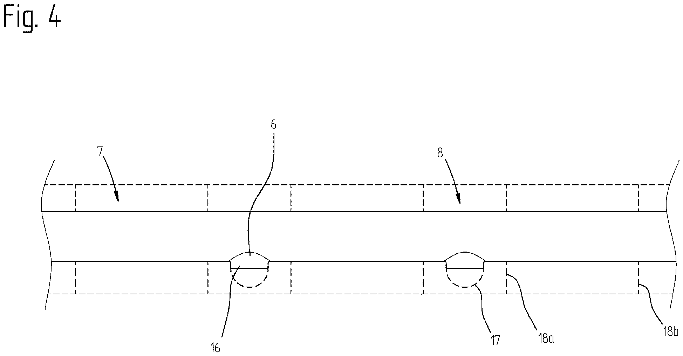

Das Formwerkzeug kann insbesondere zwei umlaufende Ketten aufweisen, welche jeweils eine Vielzahl an Kettengliedern 18, 28 (gestrichelt in Fig. 4 symbolisiert) aufweisen. Die beiden Ketten verfahren zweckmäßigerweise mit demselben Tempo, welches der Fahrgeschwindigkeit des Rohrs bzw. Hauptrohrs 2 entspricht. Vorzugsweise jedes Kettenglied 18, 28 beider Ketten stößt beim Erreichen des in der Umformung befindlichen Hauptrohrs an einem gegenüberliegenden Kettenglied 18, 28 der jeweils anderen Kette an, sodass das Rohr bzw. Hauptrohr 2 dazwischen gepresst wird und die vorgegebene Form von Formflächen der Kettenglieder 18, 28 annimmt. Hierzu mag das Rohr bzw. Hauptrohr 2 im Inneren mit etwas Druck beaufschlagt sein, sodass eine entsprechende Formtreue erreicht wird.

Dort, wo ein Kettenglied 18, 28 mit dem gegenüberliegenden Kettenglied 18, 28 der jeweils anderen Kette aneinander schlägt, entsteht auf der Außenseite des Rohrs bzw. Hauptrohrs 2 typischerweise ein feiner Längsgrat 24, der sich in axialer Richtung erstreckt. Zweckmäßigerweise umfasst das Rohr bzw. Hauptrohr 2 auf seiner Außenseite wenigstens einen Längsgrat 24 und vorzugsweise zwei Längsgrate 24. Die zwei Längsgrate 24 sind vorzugsweise hinsichtlich der Achse A einander diametral gegenüberliegend angeordnet.

Jeweils zwei in axialer Richtung benachbarte Kettenglieder 18, 28 einer Kette erzeugen ausweislich Fig. 4 zweckmäßigerweise einen Kettengliedübergang 18a, 18b, wobei die Kettengliedübergänge 18a, 18b in Fig. 4 als gestrichelte Linie symbolisiert sind. Zweckmäßigerweise umfasst das Hauptrohr 2 eine Vielzahl an Quergraten 23, welche insbesondere durch jeweils zwei axial aufeinanderfolgende Kettenglieder 18, 28 beider Ketten gebildet werden und sich an der Position der Kettengliedübergänge 18a, 18b befinden. Es ist erkennbar, dass die axiale Ausdehnung des Zwischenabschnitts 7 größer als diejenige des Kettenglieds 28 sein kann. Es ist möglich, dass die axiale Ausdehnung eines Abgangsabschnitts 8 kleiner ist als diejenige eines zugehörigen Kettenglieds 18.

**In** Fig. 4 ist das Rohr bzw. Hauptrohr 2 dieses Ausführungsbeispiels ohne Leitungsverbinder 9 dargestellt. Die gestrichelt dargestellten, bogenförmigen Elemente mögen abgeschnittene Abschlussstücke 17 sein, durch welche die Nebenöffnungen 6 entstehen. Nachdem das Rohr bzw. Hauptrohr 2 das Formwerkzeug durchlaufen hat wird es zweckmäßigerweise an einem hier nicht dargestellten Schneidwerkzeug vorbeigeführt, welches die Abschlussstücke 17 von den Anschlussstutzen 16 abschneidet. Danach mag das kontinuierlich hergestellte Rohr mithilfe eines hier nicht dargestellten Trennwerkzeugs wiederholt durchtrennt werden, so dass aus dem kontinuierlich hergestellten Rohr die Hauptrohre 2 mit definierten Längen entstehen.

**In** Fig. 5 ist ein zweites Ausführungsbeispiel einer erfindungsgemäßen Hauptleitung 1 dargestellt. Das zweite Ausführungsbeispiel ist weitgehend identisch zum ersten Ausführungsbeispiel, wobei im Unterschied zum ersten Ausführungsbeispiel das Hauptrohr 2 mehrere Wellrohrabschnitte 25 aufweist. Vorzugsweise umfasst jeder Zwischenabschnitt 7 wenigstens einen und bevorzugt genau einen Wellrohrabschnitt 25. In dem zweiten Ausführungsbeispiel sind die Wellrohrabschnitte 25 lediglich den Zwischenabschnitten 7 zugeordnet bzw. nur Bestandteil der Zwischenabschnitte 7 und insbesondere nicht Bestandteil der Abgangsabschnitte 8. Die Zwischenabschnitte 7 dieses Ausführungsbeispiels weisen an ihren axialen Enden jeweils einen wellrohrfreien Teilabschnitt auf. Die Abgangsabschnitte 8 sind bevorzugt wellrohrfrei ausgebildet.

Die Wellrohrabschnitte 25 aus Fig. 5 werden vorzugsweise mittels entsprechenden Kettengliedern hergestellt, die in Fig.5 nicht dargestellt und zweckmäßigerweise anders als die Kettenglieder 28 aus Fig. 4 ausgebildet sind. Die Zwischenabschnitte 7 können axial ausgedehnter als die Wellrohrabschnitte 25 bzw. die dazugehörigen Kettenglieder sein. Die Abgangsabschnitte 8 werden bevorzugt mittels der Kettenglieder 18 ausgebildet, wobei die Kettenglieder 18 axial ausgedehnter als die Abgangsabschnitte 8 sein können, vgl. Fig. 4.

### Bezugszeichenliste

- 1: Hauptleitung
- 2: Hauptrohr
- 3: Hauptabgang
- 4: Nebenabgang
- 5: Hauptöffnung
- 6: Nebenöffnung
- 7: Zwischenabschnitt von 2
- 8: Abgangsabschnitt von 2
- 9: Leitungsverbinder von 4
- 10: Anschlussabschnitt von 26
- 11: Kupplungsabschnitt von 26
- 12: Rastelement von 9, 26
- 13: Dichtung von 9
- 14: Mittelabschnitt von 26
- 15: Rastelementbasis von 26
- 16: Anschlussstutzen von 2
- 17: Abgeschnittenes Abschlussstück
- 18: Kettenglied für 8
- 18a,b: Kettengliedübergang
- 19: Ausnehmung von 9, 10, 26 für 16
- 20: Anschlusskörper von 3
- 21: Rohrstück von 3
- 22: Rohrverbinder von 3
- 23: Quergrat
- 24: Längsgrat
- 25: Wellrohrabschnitt
- 26: Leitungsverbinderkörper von 9
- 27: Verschlossenes Rohrende
- 28: Kettenglied für 7, 25
- A: Achse

## Patentansprüche

1. Hauptleitung (1) zum Verteilen oder Sammeln eines Mediums und insbesondere eines Temperiermediums, wobei die Hauptleitung (1) ein Hauptrohr (2) und wenigstens drei Abgänge (3, 4) aufweist, wobei die Abgänge (3, 4) mit dem Hauptrohr (2) verbunden sind, wobei die Abgänge (3, 4) jeweils einer Öffnung (5, 6) des Hauptrohrs (2) zugeordnet sind und an der jeweils zugeordneten Öffnung (5, 6) angeschlossen sind, wobei das Hauptrohr (2) eine Achse A umfasst und eine axiale Richtung definiert,
**dadurch gekennzeichnet, dass**
das Hauptrohr (2) und/oder wenigstens einer der Abgänge (3, 4) ein Elastomer umfasst.

2. Hauptleitung (1) nach Anspruch 1, wobei einer der Abgänge (3, 4) ein Hauptabgang (3) ist, wobei wenigstens einer der Abgänge (3, 4) ein Nebenabgang (4) ist, wobei vorzugsweise ein Innendurchmesser des Hauptabgangs (3) und/oder des Hauptrohrs (2) wenigstens axial abschnittsweise größer ist als ein Innendurchmesser des wenigstens einen Nebenabgangs (4).

3. Hauptleitung (1) nach Anspruch 1 oder 2, wobei das Hauptrohr (2) einstückig, vorzugsweise wenigstens schichtweise integral und besonders vorzugsweise vollständig integral ausgebildet ist.

4. Hauptleitung (1) nach einem der Ansprüche 1 bis 3, wobei ein Gewichtsanteil des Elastomers wenigstens 30 bzw. 50 bzw. 70 % beträgt.

5. Hauptleitung (1) nach einem der Ansprüche 1 bis 4, wobei wenigstens eine der Öffnungen (5, 6) bzw. Nebenöffnungen (6) durch einen Anschlussstutzen (16) gebildet wird, wobei der Anschlussstutzen (16) gegenüber einer Außenoberfläche des Hauptrohrs (2) in einem Querschnitt des Hauptrohrs (2) vorzugsweise wenigstens abschnittsweise - insbesondere nach radial außen - vorspringt.

6. Hauptleitung (1) nach einem der Ansprüche 1 bis 5, wobei wenigstens einer der Abgänge (3, 4) bzw. Nebenabgänge (4) einen Verbinder (9, 22) bzw. Leitungsverbinder (9) aufweist, wobei vorzugsweise der Leitungsverbinder (9) einen Anschlussabschnitt (10) umfasst und der Anschlussabschnitt (10) mit dem Hauptrohr (2) bzw. mit einer zugeordneten Nebenöffnung (6) bzw. mit einem zugeordneten Anschlussstutzen (16) des Hauptrohrs (2) - insbesondere stoffschlüssig und besonders vorzugsweise mittels Schweißung - verbunden ist.

7. Hauptleitung (1) nach einem der Ansprüche 1 bis 6, wobei das Hauptrohr (2) wenigstens einen Wellrohrabschnitt (25) und vorzugsweise wenigstens zwei Wellrohrabschnitte (25) umfasst.

8. Leitungssystem zum Verteilen und Sammeln eines Mediums und insbesondere eines Temperiermediums, wobei das Leitungssystem eine erste Hauptleitung (1) nach einem der Ansprüche 1 bis 7 umfasst, wobei das Leitungssystem eine zweite Hauptleitung (1) nach einem der Ansprüche 1 bis 7 aufweist.

9. Verwendung einer Hauptleitung nach einem der Ansprüche 1 bis 7 bzw. eines Leitungssystems nach Anspruch 8 zur Temperierung einer mobilen oder stationären Einrichtung, vorzugsweise zur Temperierung einer mobilen oder stationären Batterie, weiter vorzugsweise zur Temperierung einer Antriebsbatterie eines Fahrzeugs.

10. Verfahren zur Herstellung einer Hauptleitung (1), insbesondere einer Hauptleitung (1) nach einem der Ansprüche 1 bis 7, wobei die Hauptleitung (1) ein Hauptrohr (2) und wenigstens drei Abgänge (3, 4) aufweist, wobei die Abgänge (3, 4) mit dem Hauptrohr (2) verbunden sind, wobei die Abgänge (3, 4) jeweils an eine Öffnung (5, 6) des Hauptrohrs (2) angeschlossen sind, wobei vorzugsweise das Hauptrohr (2) aus einem extrudierten bzw. koextrudierten Rohr hergestellt wird.
